# FASCICULE DE BREVET EUROPEEN

(11) **EP 0 519 817 B1**
(45) Date de publication et mention de la délivrance du brevet: **15.03.1995**
(21) Numéro de dépôt: 92401687.6
(22) Date de dépôt: 17.06.1992
(51) Int. Cl.: G01L 9/00

(54) **Dispositif support d'une capsule de capteur electrique**
Trägervorrichtung für die Kapsel eines elektrischen Wandlers
Supporting device for the capsule of an electrical transducer

(30) Priorité: 18.06.1991 FR 9107439
(43) Date de publication de la demande: 23.12.1992
(73) Titulaire: JAEGER, F-92303 Levallois-Perret (FR)
(72) Inventeur: Dumoulin, Georges, F-92600 Asnières (FR); Crossay, Isabelle, F-75011 Paris (FR)
(74) Mandataire: Martin, Jean-Jacques

(56) Documents cités:
- EP-A- 0 202 786
- US-A- 5 014 557

## Description

La présente invention concerne un dispositif support d'une capsule de capteur électrique.

Elle trouve notamment, mais non exclusivement, application dans la réalisation d'un dispositif support d'une capsule comprenant un transducteur piézo-résistif au silicium, pour la mesure de pression.

Le but principal de la présente invention est de proposer des moyens simples et économiques qui permettent de supporter une capsule de capteur électrique, tout en protégeant celle-ci à l'égard des vibrations mécaniques et en assurant une étanchéité sur la capsule.

Ce but est atteint selon la présente invention, grâce à un dispositif comprenant :
- deux coquilles en matériau souple définissant en combinaison une chambre apte à loger la capsule de capteur, tout en laissant passer les fils de sortie de ce capteur, de sorte que ceux-ci soient accessibles à l'extérieur des coquilles, et
- un boîtier métallique formé d'un carter et d'un couvercle comportant des moyens de fixation respectifs, conçu pour recevoir les deux coquilles enveloppant la capsule de capteur et comprimer celle-ci sur les fils de sortie du capteur lorsque les moyens de fixation respectifs prévus sur le carter et sur le couvercle sont verrouillés.

Selon une caractéristique avantageuse de la présente invention, les coquilles en matériau souple sont réalisées en élastomère.

Selon une autre caractéristique avantageuse de la présente invention, les moyens de fixation comprennent des pattes sur l'un au moins du carter ou du couvercle, conçues pour être engagées dans des découpes prévues sur l'autre du couvercle ou du carter, puis vrillées.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 représente une vue schématique en coupe axiale d'une capsule de capteur électrique contenant un transducteur piézo-résistif au silicium,
- la figure 2 représente une vue schématique en coupe axiale d'un dispositif support conforme à la présente invention,
- la figure 3 représente une vue schématique en coupe axiale d'un carter de boîtier conforme à la présente invention,
- la figure 4 représente une vue de dessus du même carter de boîtier,
- la figure 5 représente une vue en plan du couvercle de boîtier conforme à la présente invention,
- la figure 6 représente une vue latérale du même couvercle de boîtier,
- la figure 7 représente une vue en coupe axiale d'une coquille en matériau souple conforme à la présente invention,
- la figure 8 représente une vue schématique en coupe axiale similaire à la figure 2 d'une variante de réalisation d'un dispositif support conforme à la présente invention,
- la figure 9 représente un premier mode de fixation sur un support, d'un boîtier logeant un dispositif support conforme à la présente invention, et
- la figure 10 représente schématiquement un second mode de fixation de ce boîtier sur un support.

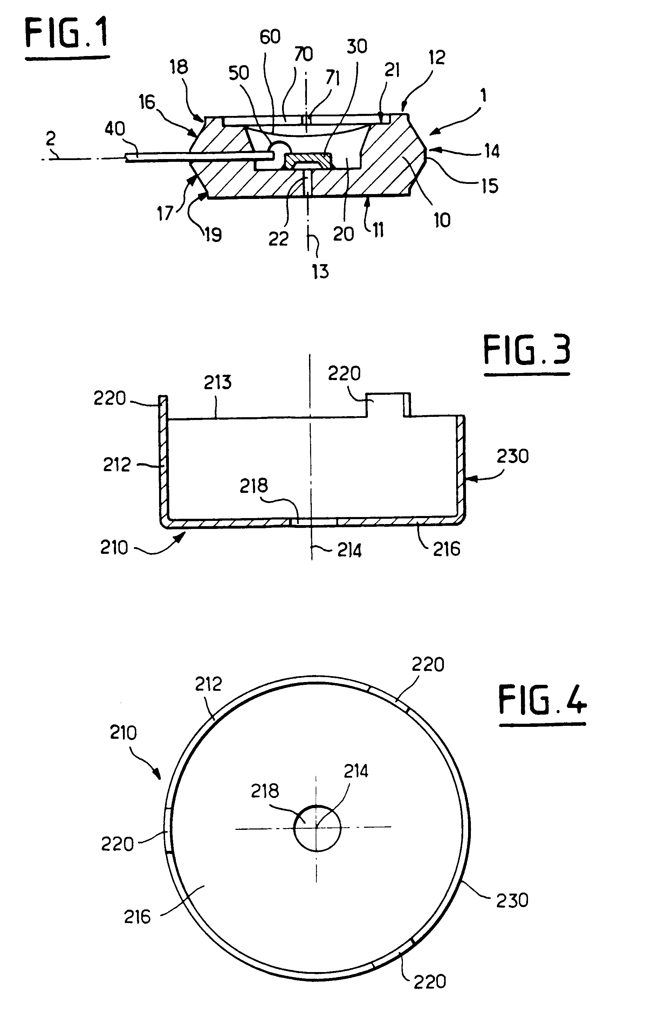

On a représenté schématiquement sur la figure 1 annexée, un exemple non limitatif de capsule de capteur susceptible d'être placée dans un dispositif support conforme à la présente invention.

Il s'agit en l'espèce d'un capteur de force, en particulier de pression, comprenant un transducteur piézo-résistif au silicium.

De nombreux capteurs de pression au silicium ont déjà été proposés. A titre d'exemple non limitatif, il peut s'agir d'un capteur commercialisé par la Société MOTOROLA sous la référence MPX100 ou MPX5100 ou encore les capteurs commercialisés par la Société SENSOR TECHNICS sous les références SCC, SPX, SCX, etc ...

On aperçoit sur la figure 1 annexée un capteur 1 comprenant un boîtier en matériau thermoplastique 10. Ce boîtier 10 possède deux faces principales 11, 12, généralement planes, parallèles entre elles et perpendiculaires à l'axe 13 du boîtier 10. La surface périphérique 14 du boîtier 10 est généralement convexe et de révolution autour de l'axe 13. Plus précisément, cette surface périphérique 14 est formée de cinq facettes: une facette centrale 15 généralement cylindrique de révolution autour de l'axe 13 et parallèle à celui-ci, deux facettes secondaires 16, 17, disposées de part et d'autre de la facette centrale 15, et deux facettes externes 18, 19, placées respectivement de part et d'autre des facettes 16 et 17 précitées.

Les facettes secondaires 16, 17, sont symétriques par rapport à un plan médian 2 qui est orthogonal à l'axe 13. Elles sont de forme tronconique et convergent vers l'axe 13 en éloignement de la facette centrale 15. Les facettes externes 18, 19, sont cylindriques de révolution autour de l'axe 13 et parallèles à celui-ci.

Le boîtier 10 ainsi formé définit une chambre interne 20 centrée sur l'axe 13 conçue pour recevoir une pastille 30 de semiconducteur, par exemple du silicium. Une structure de jaugeage est implantée dans la pastille 30. Il s'agit généralement d'un pont de Wheatstone à quatre éléments, agencé de sorte que la résistance des éléments du pont varie en fonction de la pression. La pastille 30 peut également comprendre un circuit de traitement de signal.

La conception de ce capteur n'est cependant pas limitée à cette disposition particulière. D'autres configurations de jaugeage implantées dans des pastilles sont connues de l'homme de l'art et peuvent être retenues dans le cadre de la présente invention.

Des broches 40 traversent le boîtier 10 perpendiculairement à l'axe 13, selon le plan médian 2 précité. Les broches 40 émergent dans la chambre 20 et débouchent sur la surface extérieure 14 du boîtier 10 au niveau de la facette centrale 15. La pastille 30 est reliée aux broches 40 par l'intermédiaire de fils de liaison soudés 50.

La pression externe est transmise à la pastille 30 par l'intermédiaire d'un gel silicone 60 qui enrobe celle-ci dans la chambre 20. La chambre 20 est de plus fermée par une plaque de couverture 70 placée dans un dégagement 21 du boîtier. Un passage traversant 71 centré sur l'axe 13 est prévu dans la plaque de couverture 70 pour transmettre la pression externe au gel silicone 60 et donc à la pastille .

De même un passage traversant 22 est prévu dans le fond du boîtier 10 en regard de la pastille 30.

Comme représenté sur la figure 2 annexée, le dispositif support conforme à la présente invention comprend deux coquilles 100 et un boîtier 200.

Les coquilles 100 sont de géométrie sensiblement identiques entre elles. Les coquilles 100 peuvent être soit indépendantes, soit reliées entre elles par un pont souple formant charnière, tel que référencé 101 sur la figure 2.

Les coquilles 100 sont réalisées en matériau souple. Elles définissent en combinaison une chambre 102 apte à loger la capsule de capteur 1, tout en laissant passer les broches de sortie 40 de ce capteur, de sorte que ces broches soient accessibles à l'extérieur des coquilles 100.

De préférence, les coquilles 100 sont réalisées en matériau élastomère.

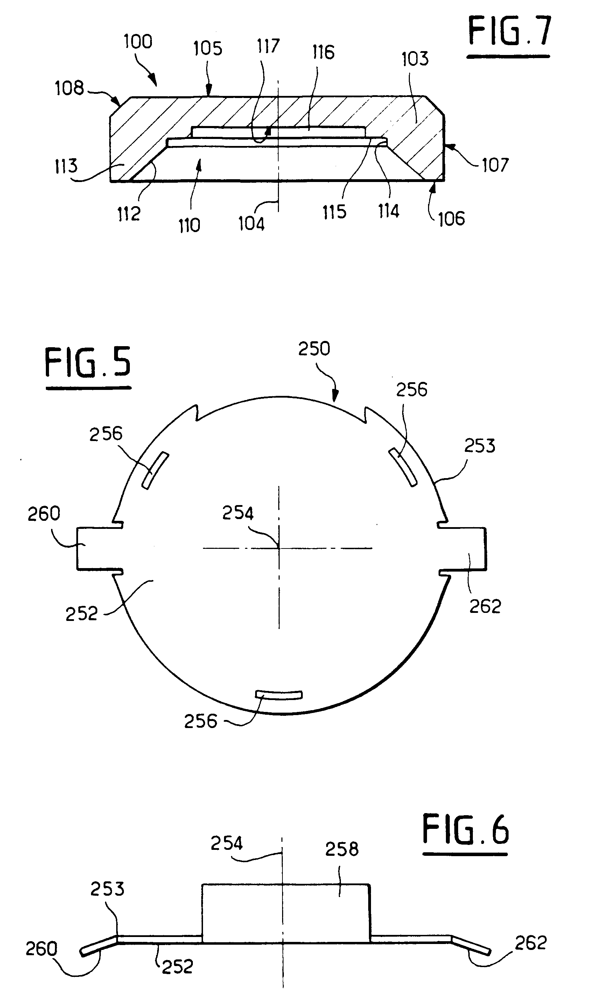

On a représenté en coupe axiale sur la figure 7, l'une des deux coquilles 100.

Cette coquille comprend un corps 103 généralement circulaire de révolution autour d'un axe 104. Le corps 103 comprend deux faces principales généralement planes 105, 106, parallèles entre elles, et perpendiculaires à l'axe 104. La surface périphérique extérieure 107 du corps 103 est une surface de révolution autour de l'axe 104. Il s'agit pour l'essentiel d'une surface cylindrique de révolution autour de l'axe 104 et donc parallèle à celui-ci, tronquée toutefois par une surface tronconique 108 à proximité de la surface principale 105. Le corps 103 possède une cavité 110 généralement complémentaire de la moitié de l'épaisseur d'une capsule 1. Cette cavité 110 est délimitée essentiellement par une première facette 112 tronconique évasée vers l'extérieur, généralement complémentaire de l'une des facettes 16 ou 17 de la capsule 1 de capteur, par une seconde facette 114 cylindrique de révolution autour de l'axe 104 généralement complémentaire des facettes externes 18, 19 de la capsule 1 de capteur, et enfin par une paroi de fond 115 perpendiculaire à l'axe 13 et conçue pour reposer sur l'une des faces principales 11, 12, de la capsule 1 de capteur.

La surface externe 107 définit une lèvre souple 113 en combinaison avec la facette interne 112 et la face principale 106.

Lors de la fermeture du dispositif support sur une capsule 1 de capteur, les deux lèvres 113 des coquilles 100 placées coaxialement en regard viennent reposer sur les broches 40 et par écrasement assurent l'étanchéité sur celles-ci.

On notera que dans le fond de la cavité 110 précitée, il est prévu un dégagement 116 cylindrique de révolution autour de l'axe 104 dont le fond 117 est perpendiculaire à l'axe 104. Ce dégagement 116 facilite les déformations de la matière du corps 103 lors de la mise en compression des coquilles 100 par le boîtier 200 pour faciliter l'adaptation des coquilles 100 à la géométrie de la capsule 1 de capteur.

On notera également à l'examen de la figure 2, que l'une des deux coquilles 100 est munie d'un passage traversant centré sur l'axe 104 et référencé 120. Ce passage traversant 120 a pour but de permettre l'application de la pression externe sur la capsule de capteur.

Le boîtier 200 est formé d'un carter 210 et d'un couvercle 250.

Le carter 210 et le couvercle 250 sont réalisés en un matériau conducteur de l'électricité, de préférence en métal. Le boîtier 200 est conçu pour recevoir les deux coquilles 100 enveloppant la capsule 1 de capteur et comprimer celles-ci sur les fils de sortie 40 du capteur lorsque des moyens de fixation respectifs prévus sur le carter 210 et sur le couvercle 250 sont verrouillés.

Selon le mode de réalisation préférentiel représenté sur les figures annexées, le carter 210 comprend une paroi 212 cylindrique de révolution autour d'un axe 214.

Le carter est obturé à une extrémité par une paroi de fond 216 formé d'un disque perpendiculaire à l'axe 214. Cette paroi de fond 216 est munie d'un passage traversant 218 centré sur l'axe 214. Après montage, le passage 218 est placé en regard du passage 120 ménagé dans l'une des coquilles 100 et en regard de l'un des passages 71 ou 22 ménagé dans la plaque de couverture 70 ou le boîtier 10 de la capsule. Le bord périphérique libre 213 de la paroi 212, qui est opposé à la paroi de fond 216, est muni de plusieurs pattes de fixation 220 (trois selon la représentation des figures 3 et 4) formées de secteurs de cylindre centrés sur l'axe 214. La paroi cylindrique 212 est de plus munie, entre deux des pattes 220 précitées, d'une découpe 230. Cette découpe 230 couvre un secteur angulaire de l'ordre de 35°. Elle s'étend sensiblement sur la moitié de la hauteur de la paroi cylindrique 212 et débouche sur le bord périphérique libre 213.

Le couvercle 250 est formé essentiellement d'un disque plan 252 centré sur un axe 254. Le disque 252 est muni, à proximité de sa périphérie, de plusieurs découpes 256 en nombre égal au nombre de pattes de fixation 220 et formées de secteurs de couronnes centrés sur l'axe 254 pour recevoir respectivement les pattes 220 précitées.

Le bord 253 du disque 252 est muni d'une toile 258 en forme de secteur de cylindre centré sur l'axe 254, complémentaire de la découpe 230.

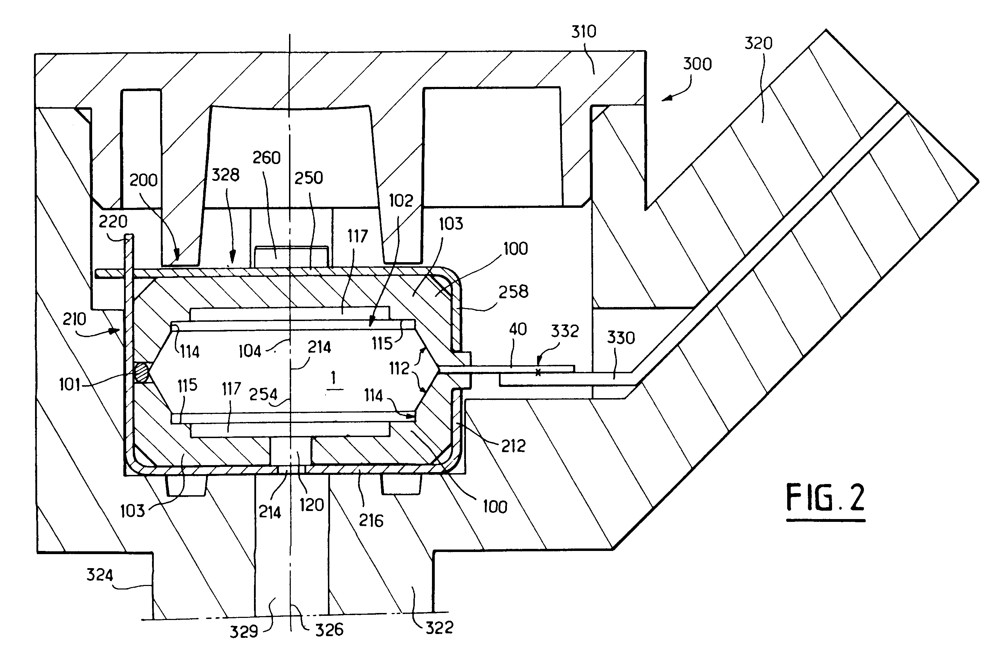

Enfin, on notera à l'examen des figures 5 et 6, la présence sur le disque 252 du couvercle 250 de deux pattes 260, 262 diamétralement opposées par rapport à l'axe 254 et raccordées à la périphérie 253 de celui-ci. Ces pattes 260, 262, sont généralement radiales par rapport à l'axe 254, tout en étant inclinées sur le plan moyen du disque 252 dans une direction opposée à la toile 258.

Pour procéder à l'assemblage du dispositif support conforme à la présente invention qui vient d'être décrit, on procède essentiellement comme suit. Une capsule 1 de capteur est tout d'abord placée entre deux coquilles 100 coaxiales, les broches 40 émergeant entre les lèvres 113 des deux coquilles. Les axes 13 et 104 sont alors coaxiaux. L'ensemble ainsi formé est placé ensuite dans le carter 210. Puis le couvercle 250 est engagé sur le carter 210 en veillant à placer la toile 258 dans la découpe 230 et les pattes de fixation 220 respectivement dans les fenêtres 256. Une pression axiale est alors appliquée sur le boîtier, entre le couvercle 250 et le carter 210 pour comprimer les coquilles 100 sur la capsule 1 de capteur. En position comprimée, les pattes 220 sont vrillées, sur l'extérieur du couvercle 250, pour assurer la fixation de l'ensemble.

On obtient alors une étanchéité sur la capsule 1 grâce aux coquilles en matériau souple 100, à la seule exception du passage 120 ménagé dans l'une des deux coquilles. On obtient également un support élastique donc un amortissement fiable des vibrations grâce aux coquilles.

Comme représenté sur la figure 2, le dispositif support conforme à la présente invention formé du boîtier 200 et des coquilles 100 recevant la capsule 1 de capteur peut ensuite être placé dans un corps de capteur 300 en matière plastique apte à fixer le système sur un support approprié. Dans le cadre d'une application particulière mais non limitative, le capteur 1 comprend un transducteur de force piézo-résistif au silicium et le corps de capteur 300 est conçu pour fixer l'ensemble sur une tubulure d'admission d'air de moteur de véhicules automobiles pour mesurer la pression dans celle-ci.

Le corps de capteur 300 est de préférence réalisé en matière plastique.

Selon la représentation donnée sur la figure 2, il est formé par assemblage de deux éléments 310, 320. Ces deux éléments 310, 320 ne seront pas décrits dans le détail par la suite dans la mesure où ils sont susceptibles de faire l'objet de nombreuses variantes de réalisation.

On notera à l'examen de la figure 2 que l'élément 320 est surmoulé sur des broches de connexion 330 soudées en 332 sur les broches de sortie 40 de la capsule 1.

L'élément 320 comprend de plus une partie 322 formant plongeur, délimité par une enveloppe externe 324 cylindrique de révolution autour d'un axe 326. L'axe 326 coîncide avec les axes 13, 104, 214 et 254 précités.

Ce plongeur 322 est conçu pour être engagé dans un canal complémentaire formé dans le support de réception, par exemple la tubulure d'admission d'air.

Le boîtier 200 est placé dans une chambre 328 formée dans l'élément 320, le boîtier 200 étant immobilisé dans cette chambre 328 par les pattes de fixation 260, 262, qui viennent reposer par déformation élastique sur la paroi interne de cette chambre 328.

Bien entendu le boîtier 200 peut être fixé par tout autre moyen classique approprié dans la chambre 328 de l'élément 320, par exemple par collage, soudage, vissage, ou mise en compression à l'aide d'un ressort.

Le boîtier 200 sert de blindage électrique et est réalisé par exemple en acier doux, voire en fer doux.

Les coquilles 100 sont réalisées de préférence en élastomère, très préférentiellement en fluoro-silicone. Le matériau des coquilles 100 présente avantageusement une dureté de l'ordre de 50 shore. De préférence le matériau élastomère composant les coquilles 100 est exempt de carbone pour présenter une faible conductibilité électrique et éviter de polluer la pastille de semi-conducteur 30.

Bien entendu la partie 322 de l'élément 320 formant plongeur est munie d'un canal traversant 329 centré sur l'axe 326 qui débouche en regard des passages 214 et 120 ménagés respectivement dans le carter 210 et la coquille 100 pour permettre l'application de la pression externe au transducteur 30.

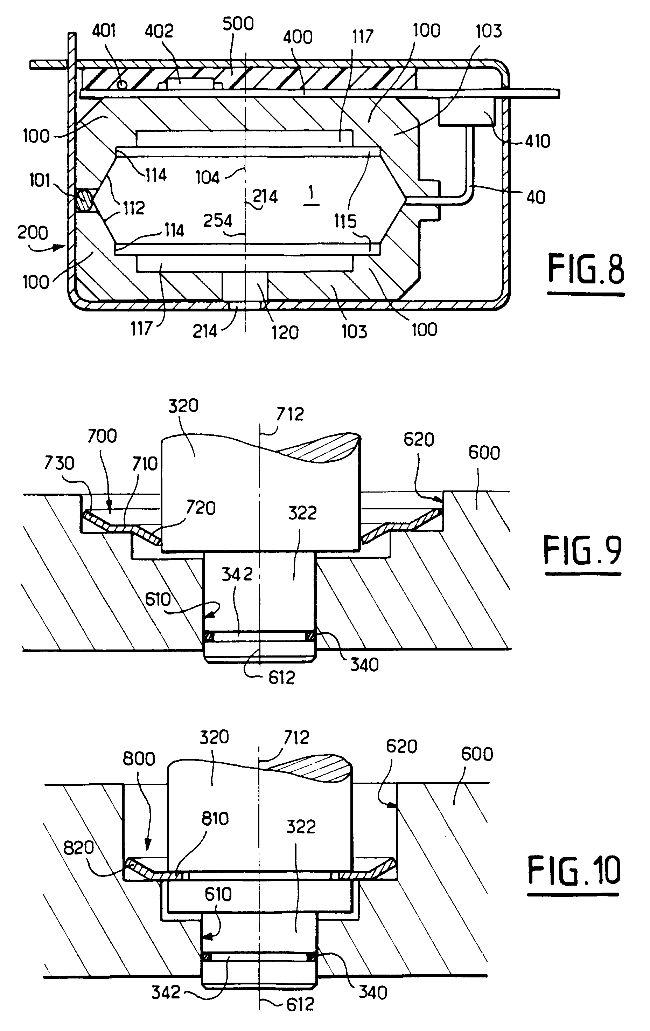

On a représenté sur la figure 8 une variante de réalisation du boîtier 200 adapté pour recevoir outre les deux coquilles 100 recevant la capsule 1, un circuit imprimé 400 définissant un circuit de traitement associé au capteur 1. Il s'agit de préférence d'un circuit anti-parasites comprenant par exemple une diode de protection en entrée contre les inversions d'alimentation, un circuit de protection contre les surtensions transmises par conduction et un circuit de protection contre les couplages capacitifs parasites.

On a représenté schématiquement sur la figure 8 des composants 401, 402 fixés sur la plaquette de circuit imprimé 400 et composant le circuit de traitement précité.

La plaquette 400 supporte de plus un connecteur 410 apte à recevoir par enfichage les broches 40 du capteur. Selon la représentation donnée sur la figure 8, le circuit imprimé 400 s'étend perpendiculairement aux axes 104, 214 et 254. La direction d'enfichage du connecteur 410 est donc parallèle à ces axes. De ce fait comme représenté sur la figure 8, les broches 40 sont pliées à 90°, sur l'extérieur des coquilles 100, pour arriver parallèlement aux axes 104, 214 et 254 sur le connecteur 410. Plus précisément le circuit imprimé 400 est placé sur l'extérieur de la coquille 100 dépourvue de passage 120.

Les composants 401, 402, sont de préférence prévus sur la face du circuit imprimé 400 opposée à la coquille 100 adjacente. Pour éviter de porter les composants 401, 402, en contact avec la surface interne du couvercle 250, il est prévu de préférence une couche de protection en matériau souple électriquement isolant 500 entre le circuit imprimé 400 et le couvercle 250.

La taille du boîtier 200 doit bien entendu être adaptée à la taille du système comprenant les deux coquilles 100 recevant le capteur 1 plus le circuit imprimé 400 et la couche de protection 500.

Dans le cadre de la variante représentée sur la figure 8, le circuit imprimé 400 émerge à l'extérieur du boîtier 200, entre le carter 210 et le couvercle 250, au niveau de la découpe 230, et la prise d'information électrique est effectuée sur le circuit imprimé 400, et non pas directement sur les broches 40.

On notera que l'utilisation d'un connecteur d'enfichage 410 permet un assemblage du système comme décrit précédemment. En effet, lors de la mise en compression des coquilles 100, parallèlement aux axes 104, 214 et 254 par fermeture du boîtier 200, on assure en toute sécurité un contact entre les broches 40 du capteur et les éléments du connecteur 410.

On a représenté schématiquement sur la figure 9, un support 600 muni d'un canal traversant 610 apte à recevoir le plongeur 322 précité. Le support 600 peut être formé par exemple d'une tubulure d'admission d'air sur véhicule automobile.

Selon le mode de réalisation représenté sur la figure 9, le corps de capteur 300 est fixé sur le support 600 grâce à un dispositif de fixation 700 formé d'une pièce comprenant une structure support annulaire 710 centrée sur un axe principal 712 (qui coîncide avec l'axe 612 de l'alésage 610), une première jupe 720 liée à la structure support annulaire 710 et orientée vers l'intérieur de celle-ci tout en étant inclinée dans une première direction axiale en référence à l'axe principal 712, pour être engagée sur l'élément 320 de capteur, et une seconde jupe 730 liée à la structure support annulaire 710 et orientée vers l'extérieur de celle-ci, tout en étant inclinée dans une seconde direction axiale en référence à l'axe principal pour être engagée dans une cavité 620 du support prolongeant le canal 610. Les jupes 720 et 730 peuvent être ondulées ou à ailettes séparées. Un tel dispositif de fixation 700 est décrit et représenté dans une demande de brevet déposée en France par la demanderesse le même jour que la présente demande de brevet et intitulée "dispositif de fixation d'un capteur dans l'alésage d'un support". Pour cette raison, le dispositif de fixation 700 ne sera pas décrit très en détail par la suite.

On notera toutefois que le dispositif de fixation 700 est de préférence réalisé en métal, typiquement en acier à ressort. L'inclinaison des jupes 720, 730 par rapport à un plan normal à l'axe principal 712 est de préférence comprise entre 15 et 35°, typiquement de l'ordre de 25°. Le diamètre interne libre délimité au repos par le sommet de la jupe 720 est inférieur au diamètre du corps 320, tandis que l'enveloppe externe du dispositif de fixation 700 délimitée par le sommet de la jupe 730 est supérieur au repos au diamètre de la cavité de réception 620.

Selon le mode de réalisation représenté sur la figure 9, la structure support annulaire 710 est formée d'une rondelle plane perpendiculaire à l'axe 712. En variante la structure support annulaire 710 pourrait être formée d'un manchon cylindrique centré sur l'axe 712. Les jupes 720, 730 sont raccordées respectivement à la périphérie interne et à la périphérie externe de la structure support annulaire 710. Lorsque le dispositif de fixation 700 est engagé dans la cavité 620, l'angle d'inclinaison de la jupe 730 par rapport au plan perpendiculaire à l'axe 712 s'ouvre pour verrouiller le dispositif 700 sur le support 600. De même lorsque le corps de capteur 320 est engagé sur la jupe 720, l'angle d'inclinaison de celle-ci sur le plan perpendiculaire à l'axe 712 s'ouvre pour verrouiller élastiquement le corps de capteur 320 sur le dispositif de fixation 700.

On a représenté sur la figure 10 une variante de réalisation dans laquelle le dispositif de fixation 800 comprend simplement une structure support annulaire 810 liée à translation avec l'élément 320 et une jupe 820 liée à la structure support annulaire 810 et orientée vers l'extérieur de celle-ci tout en étant inclinée dans une direction opposée à la direction d'introduction du corps de capteur 320 dans le support 600. Ainsi, la jupe 820 remplit la même fonction que la jupe 730 de la première variante représentée sur la figure 9.

La liaison en translation du dispositif de fixation 800 et du corps de capteur 320 peut être obtenue par toute technique classique appropriée, par exemple par surmoulage du corps de capteur 320 sur le dispositif de fixation 810, ou encore par emboîtage de deux éléments formant le corps de capteur 320 respectivement de part et d'autre du dispositif de fixation 800.

De préférence, un joint torique 340 est placé dans une gorge annulaire 342 formée à la base du plongeur 322, pour assurer l'étanchéité entre celui-ci et l'alésage complémentaire 610.

Bien entendu la présente invention n'est pas limitée aux modes de réalisation particuliers qui viennent d'être décrits mais s'étend à toutes variantes conformes à son esprit.

## Revendications

1. Dispositif support d'une capsule de capteur électrique, caractérisé par le fait qu'il comprend :
- deux coquilles (100) en matériau souple définissant en combinaison une chambre apte à loger la capsule de capteur (1) tout en laissant passer les fils de sortie (40) de ce capteur de sorte que ceux-ci soient accessibles à l'extérieur des coquilles (100), et
- un boîtier métallique (200) formé d'un carter (210) et d'un couvercle (250) comportant des moyens de fixation respectifs (220, 256), conçus pour recevoir les deux coquilles (100) enveloppant la capsule de capteur (1) et comprimer celles-ci sur les fils de sortie (40) du capteur, lorsque les moyens de fixation respectifs (220, 256) prévus sur le carter (210) et sur le couvercle (250) sont verrouillés.

2. Dispositif support selon la revendication 1, caractérisé par le fait que l'une des coquilles (100) est munie d'un passage traversant (120) tandis que l'un du carter (210) ou du couvercle (250) est muni d'un autre passage traversant (214) conçu pour être placé en regard du passage (120) ménagé dans la coquille (100).

3. Dispositif support selon l'une des revendications 1 ou 2, caractérisé par le fait que les coquilles (100) sont réalisées en élastomère.

4. Dispositif support selon la revendication 3, caractérisé par le fait que les coquilles (100) sont réalisées en fluoro-silicone.

5. Dispositif support selon l'une des revendications 3 ou 4, caractérisé par le fait que les coquilles (100) sont réalisées en élastomère exempt de carbone.

6. Dispositif support selon l'une des revendications 1 à 5, caractérisé par le fait que les moyens de fixation comprennent des pattes (220) vrillables formées sur l'un du carter (210) ou du couvercle (250) et engagés dans des fenêtres complémentaires (256) ménagées sur l'autre du couvercle (250) ou du carter (210).

7. Dispositif support selon l'une des revendications 1 à 6, caractérisé par le fait que le boîtier (200) est réalisé en fer doux ou acier doux.

8. Dispositif support selon l'une des revendications 1 à 7, caractérisé par le fait que les deux coquilles (100) sont articulées entre elles autour d'une charnière souple (101).

9. Dispositif support selon l'une des revendications 1 à 8, caractérisé par le fait que les coquilles (100) possèdent une lèvre périphérique souple (113).

10. Dispositif support selon l'une des revendications 1 à 9, caractérisé par le fait que le boîtier (200) est conçu pour recevoir une plaquette de circuit imprimé (400) comportant un connecteur enfichable (410) apte à recevoir les broches de sortie (40) du capteur.

11. Dispositif support selon la revendication 10, caractérisé par le fait que la direction d'enfichage du connecteur (410) est parallèle à la direction d'introduction du couvercle (250) sur le carter (210).

12. Dispositif support selon l'une des revendications 1 à 11, caractérisé par le fait que le boîtier (200) comprend au moins deux pattes (260, 262) généralement radiales conçues pour fixer le boîtier (200) par déformation élastique dans un corps de capteur externe (300).

13. Dispositif support selon la revendication 12, caractérisé par le fait que le corps de capteur est fixé dans l'alésage (610) d'un support (600) à l'aide d'un dispositif élastique de fixation (700) comprenant une structure support annulaire (710) centrée sur un axe principale (712), une première jupe (720) liée à la structure support annulaire (710) et orientée vers l'intérieur de celle-ci, tout en étant inclinée dans une première direction axiale en référence à l'axe principal (712), pour être engagée sur un boîtier de capteur, et une deuxième jupe (730) liée à la structure support annulaire (710) et orientée vers l'extérieur de celle-ci, tout en étant inclinée dans une seconde direction axiale, en référence à l'axe principal, pour être engagée dans l'alésage (610) du support.

14. Dispositif support selon la revendication 12, caractérisé par le fait que le corps de capteur (300) est fixé dans l'alésge (610) d'un support (600) à l'aide d'un dispositif élastique de fixation (800) comprenant une structure support annulaire (810) liée à translation avec le corps de capteur (300) et munie d'une jupe (820) liée à la structure support annulaire (810) et orientée vers l'extérieur de celle-ci tout en étant inclinée dans une direction opposée à la direction d'introduction du corps (300) dans l'alésage (610) du support (600).

15. Dispositif support selon l'une des revendications 1 à 14, caractérisé par le fait que le capteur comprend un transducteur piézo-résistif au silicium (30).

## Claims

1. A support device for an electrical sensor capsule, the device being characterized by the fact that it comprises:
two shells (100) of flexible material together defining a chamber suitable for housing the sensor capsule (1) while allowing outlet leads (40) from said sensor to pass through so as to make them accessible from outside the shells (100); and
a metal housing (200) constituted by a case (210) and by a cover (250) including respective fixing means (220, 256), designed to receive the two shells (100) enveloping the sensor capsule (1) and to compress them against the outlet leads (40) of the sensor when the respective fixing means (220, 256) provided on the case (210) and on the cover (250) are fastened together.

2. A support device according to claim 1, characterized by the fact that one of the shells (100) is provided with a through passage (120) and one of the case (210) and the cover (250) is provided with another through passage (214) designed to be placed facing the passage (120) through the shell (100).

3. A support device according to claim 1 or 2, characterized by the fact that the shells (100) are made of elastomer.

4. A support device according to claim 3, characterized 3, characterized by the fact that the shells (100) are made of fluoro-silicone.

5. A support device according to claim 3 or 4, characterized by the fact that the shells (100) are made of an elastomer that is carbon-free.

6. A support device according to any one of claims 1 to 5, characterized by the fact that the fixing means comprise twistable tabs (220) formed on one of the case (210) and the cover (250) and engaged in complementary windows (256) provided in the other of the cover (250) and the case (210).

7. A support device according to any one of claims 1 to 6, characterized by the fact that the housing (200) is made of soft iron or of mild steel.

8. A support device according to any one of claims 1 to 7, characterized by the fact that the two shells (100) are hinged together about a flexible hinge (101).

9. A support device according to any one of claims 1 to 8, characterized by the fact that the shells (100) possess respective flexible peripheral lips (113).

10. A support device according to any one of claims 1 to 9, characterized by the fact that the housing (200) is designed to receive a printed circuit board (400) including a pluggable connector (410) suitable for receiving the outlet pins (40) of the sensor.

11. A support device according to claim 10, characterized by the fact that the plugging direction of the connector (410) is parallel to the direction whereby the cover (250) is applied to the case (210).

12. A support device according to any one of claims 1 to 11, characterized by the fact that the housing (200) includes at least two generally radial tabs (260, 262) designed to fix the housing (200) by elastic deformation in an external sensor body (300).

13. A support device according to claim 12, characterized by the fact that the sensor body is fixed in the bore (610) of a support (600) by means of a resilient fixing device (700) comprising an annular support structure (710) centered on a main axis (712), a first skirt (720) connected to the annular support structure (710) and directed towards the inside thereof while being inclined in a first axial direction relative to the main axis (712) in order to be engaged on a sensor housing, and a second skirt (730) connected to the annular support structure (710) and directed towards the outside thereof, while being inclined in a second axial direction relative to the main axis to be engaged in the bore (610) of the support.

14. A support device according to claim 12, characterized by the fact that the sensor body (300) is fixed in the bore (610) of a support (600) by means of a resilient fixing device (800) comprising an annular support structure (810) connected in translation with the sensor body (300) and provided with a skirt (820) connected to the annular support structure (810) and directed towards the outside thereof while being inclined in a direction opposite to the direction whereby the body (300) is inserted in the bore (610) of the support (600).

15. A support device according to any one of claims 1 to 14, characterized by the fact that the sensor comprises a silicon piezo-resistive transducer (30).

## Patentansprüche

1. Trägervorrichtung für die Kapsel eines elektrischen Aufnehmers, dadurch **gekennzeichnet**, daß er umfaßt:
- zwei Schalen (100) aus nachgiebigem Material, die gemeinschaftlich eine Kammer zum Unterbringen der Kapsel des Aufnehmers (1) unter Durchlassen der Ausgangsleitungen (50) des Aufnehmers bilden, derart, daß diese außerhalb der Schalen (100) zugänglich sind, und
- ein Metallgehäuse (200) aus einem Kasten (210) und einem Deckel (250) mit entsprechenden Befestigungsmitteln (220,256), wobei das Metallgehäuse zur Aufnahme der beiden Schalen (100), welche die Kapsel des Aufnehmers (1) einschließen, und zu deren Zusammendrücken um die Ausgangsleitungen (40) des Aufnehmers gestaltet sind, wenn die Befestigungsmittel (220,256) am Kasten (210) und am Deckel (250) verriegelt sind.

2. Trägervorrichtung nach Anspruch 1, dadurch **gekennzeichnet**, daß eine der Schalen (100) mit einem Durchlaß (120) versehen ist, während das Gehäuse (210) oder der Deckel (250) mit einem anderen Durchlaß (214) versehen ist, der dazu ausgebildet ist, ausgerichtet auf den Durchlaß (120) in der Schale (100) plaziert zu werden.

3. Trägervorrichtung nach Anspruch 1 oder 2, dadurch **gekennzeichnet**, daß die Schalen (100) aus einem Elastomer gebildet sind.

4. Trägervorrichtung nach Anspruch 3, dadurch **gekennzeichnet**, daß die Schalen (100) aus einem Fluor-Silikon-Material bestehen.

5. Trägervorrichtung nach Anspruch 3 oder 4, dadurch **gekennzeichnet**, daß die Schalen (100) aus einem Elastomer ohne Kohlenstoff gebildet sind.

6. Trägervorrichtung nach einem der Ansprüche 1 bis 5, dadurch **gekennzeichnet**, daß die Befestigungsmittel Laschen (220) umfassen, welche umbiegbar am Kasten (210) oder am Deckel (250) angeformt sind und in komplementäre Fenster (256) einsteckbar sind, die am Deckel (250) oder Kasten (210) vorgesehen sind.

7. Trägervorrichtung nach einem der Ansprüche 1 bis 6, dadurch **gekennzeichnet**, daß das Gehäuse (200) aus weichem Eisen oder Stahl besteht.

8. Trägervorrichtung nach einem der Ansprüche 1 bis 7, dadurch **gekennzeichnet**, daß die beiden Schalen (100) über ein elastisches Scharnier (101) gelenkig miteinander verbunden sind.

9. Trägervorrichtung nach einem der Ansprüche 1 bis 8, dadurch **gekennzeichnet**, daß die Schalen (100) eine weiche Umfangslippe (113) besitzen.

10. Trägervorrichtung nach einem der Ansprüche 1 bis 9, dadurch **gekennzeichnet**, daß das Gehäuse (200) dazu ausgebildet ist, eine Leiterplatte mit gedruckter Schaltung (400) aufzunehmen, welche einen Steckverbinder (410) zum Aufnehmen der Anschlüsse des Ausgangs (40) des Aufnehmers aufweist.

11. Trägervorrichtung nach Anspruch 10, dadurch **gekennzeichnet**, daß die Einsteckrichtung des Steckverbinders (410) parallel zur Einführrichtung des Deckels (250) auf den Kasten (210) ist.

12. Trägervorrichtung nach einem der Ansprüche 1 bis 11, dadurch **gekennzeichnet**, daß das Gehäuse (200) mindestens zwei im wesentlichen radiale Fortsätze (260,262) aufweist, die zur Befestigung des Gehäuses (200) durch elastische Verformung in einem Außenkörper (300) des Aufnehmers dienen.

13. Trägervorrichtung nach Anspruch 12, dadurch **gekennzeichnet**, daß der Körper des Aufnehmers in der Bohrung (610) eines Trägers (600) mittels einer elastischen Befestigungsvorrichtung (700) fixiert ist, welche eine ringförmige Stützstruktur (710), die um eine Hauptachse (712) zentriert ist, einen ersten Kragen (720), der an die ringförmige Stützstruktur (710) angeschlossen und zu deren Innerem hin orientiert und dabei in eine erste Richtung axial bezüglich der Hauptachse (712) geneigt ist, um mit einem Gehäuse des Aufnehmers zusammenzuwirken, sowie einen zweiten Kragen (730) aufweist, der an die ringförmige Stützstruktur (710) angeschlossen und nach außen hin orientiert und dabei in eine zweite axiale Richtung bezüglich der Hauptachse geneigt ist, um mit der Bohrung (610) der Stützstruktur zusammenzuwirken.

14. Trägervorrichtung nach Anspruch 12, dadurch **gekennzeichnet**, daß der Körper des Aufnehmers (300) in der Bohrung (610) eines Trägers (600) mit Hilfe einer elastischen Befestigungsvorrichtung (800) fixiert ist, welche eine ringförmige Stützstruktur (810) aufweist, die zu einer Translationsbewegung mit dem Körper des Aufnehmers (300) gekoppelt und mit einem Kragen (820) versehen ist, der an die Stützstruktur (810) angebunden und zu deren Außenseite hin orientiert und dabei in einer Richtung entgegengesetzt der Einführrichtung des Körpers (300) in die Bohrung (610) der Stützstruktur (600) geneigt ist.

15. Trägervorrichtung nach einem der Ansprüche 1 bis 14, dadurch **gekennzeichnet**, daß der Aufnehmer einen piezo-resistiven Wandler aus Silicium (30) umfaßt.
